# EUROPÄISCHE PATENTSCHRIFT

(11) **EP 3 147 585 B1**
(45) Veröffentlichungstag und Bekanntmachung des Hinweises auf die Patenterteilung: **06.06.2018**
(21) Anmeldenummer: 16189695.6
(22) Anmeldetag: 20.09.2016
(51) Int. Cl.: F24H 4/04, F28D 20/00, F24D 11/02

(54) **PUFFERSPEICHER UND WÄRMEVERSORGUNGSSYSTEM ENTHALTEND EINEN SOLCHEN**
BUFFER STORAGE AND HEAT SUPPLY SYSTEM CONTAINING SAME
BALLON TAMPON ET SYSTÈME DE PRODUCTION DE CHALEUR DOTÉ D'UN TEL BALLON TAMPON

(30) Priorität: 21.09.2015 DE 202015006684 U
(43) Veröffentlichungstag der Anmeldung: 29.03.2017
(73) Patentinhaber: Gebr. Kemper GmbH + Co. KG Metallwerke, 57462 Olpe (DE)
(72) Erfinder: Blumenthal, Roland, 50374 Erftstadt (DE)
(74) Vertreter: Grünecker Patent- und Rechtsanwälte PartG mbB

(56) Entgegenhaltungen:
- EP-A2- 2 811 233
- DE-A1-102012 112 962
- DE-A1-102013 106 412
- JP-A- S6 078 243
- US-A1- 2010 230 071

## Beschreibung

Die Erfindung betrifft einen Pufferspeicher für Heizungs- und/oder Trinkwassererwärmungsanlagen zur Bereitstellung von gespeicherter Wärme in Form von warmem bzw. wärmerem Wasser, mit einem Gehäuse, wobei das Gehäuse in einem ersten Gehäuseabschnitt wärmeres Wasser speichert und in einem zweiten Gehäuseabschnitt kälteres Wasser speichert, einer Wärmepumpe mit einer Warmseite zum Erwärmen des Wassers des Pufferspeichers und einer Kaltseite zum Kühlen des Wassers des Pufferspeichers, wobei warmes Wasser vom ersten Gehäuseabschnitt zur Warmseite der Wärmepumpe übertragbar ist zum Erwärmen des Wassers, und kaltes Wasser vom zweiten Gehäuseabschnitt zur Kaltseite der Wärmepumpe übertragbar ist zum Kühlen des Wassers, wobei das wärmere Wasser nach dem Erwärmen in den ersten Gehäuseabschnitt übertragbar ist und das kältere Wasser nach dem Kühlen in den zweiten Gehäuseabschnitt übertragbar ist und wobei das Gehäuse ein Trennelement umfasst zur Trennung des ersten Gehäuseabschnitts vom zweiten Gehäuseabschnitt.

Ein solcher Pufferspeicher ist aus der DE 10 2007 050 674 A1 bekannt. Ein ähnlicher Pufferspeicher ist aus dem DE 20 2009 006 988 U1 bekannt. Ein Pufferspeicher gemäß dem Oberbegriff von Anspruch 1 ist aus DE102013 106412A1 bekannt. Die Erfindung betrifft weiterhin ein Wärmeversorgungssystem mit einem Pufferspeicher.

Aus dem Stand der Technik sind Heizungs- als auch Trinkwassererwärmungsanlagen bekannt, die einen Pufferspeicher verwenden. In dem Pufferspeicher wird eine gewisse Wärmemenge auf einem nutzbaren Temperaturniveau gespeichert. Nachfolgend geschaltete Komponenten, beispielsweise Trinkwassererwärmer im Durchflussprinzip, nutzen dann die gespeicherte Wärme. Mit Hilfe eines Pufferspeichers kann Energie gepuffert werden, so dass die Energiezufuhr zum Pufferspeicher mit einer geringeren Leistung erfolgen kann als es die Energieabgabe gegebenenfalls notwendig macht. Mit Hilfe von Pufferspeicher können relativ kleine Wärmeerzeuger genutzt werden. Es können dabei vielfältige Wärmequellen genutzt werden, beispielsweise Gas-, Holz- oder Ölkessel, Wärmepumpen, Solarenergie, Fern- und Nahwärme oder elektrische Energie.

Bei allen genannten Wärmequellen, mit Ausnahme der elektrischen Energie, ist es für einen guten Wirkungsgrad der Wärmequelle unabdingbar, dass die Rücklauftemperatur des vom Pufferspeicher zur Wärmequelle strömenden Mediums möglichst gering ist. Grund hierfür ist bei allen genannten Wärmequellen die Tatsache, dass der Wirkungsgrad eine Funktion der Mediumtemperatur ist. Aufgrund dieser Tatsache wird die Mediumtemperatur so gering wie möglich gehalten. Im Falle einer zentralen Trinkwasserversorgung steht diese Forderung jedoch im Konflikt mit der Trinkwasserhygiene. Bei der Trinkwasserhygiene darf die Trinkwarmwassertemperatur an keinem Punkt und zu keiner Zeit im Verteilsystem unter circa 55°C fallen. Grund hierfür ist das Wachstum von Bakterien, Viren und anderer Mikroorganismen unterhalb dieses Wertes. Oberhalb von 55°C werden diese sicher abgetötet. Man erreicht diese Temperaturerhaltung durch eine pumpengetriebene Zirkulation von Trinkwasser durch das gesamte Gebäude. Da das Verteilsystem Wärmeverluste aufweist, wird das Trinkwarmwasser mit einer Temperatur von 60°C aus dem Trinkwassererwärmer entnommen und so durch das Gebäude geleitet, dass es niemals kälter als 55°C wird. Daraus ergibt sich automatisch die Forderung nach der Aufwärmung von 55°C auf 60°C. Alle bisher bekannten Verfahren zur Aufheizung von 55°C warmem Trinkwasser auf 60°C stehen jedoch dem Wunsch eines guten Wirkungsgrads der Wärmequelle entgegen.

Es besteht daher das ständige Bedürfnis ein Wärmeversorgungssystem und einen Pufferspeicher zur Verfügung zu stellen, welche es ermöglichen den Wirkungsgrad der genutzten Wärmequellen ohne Einbußen zu nutzen und die Hygieneanforderungen der Trinkwassernutzung einzuhalten.

Der Erfindung liegt daher die Aufgabe zugrunde, einen Pufferspeicher und ein Wärmeversorgungssystem zur Verfügung zu stellen, welche es ermöglichen den Wirkungsgrad der Wärmequellen ohne Einbußen zu nutzen und die Hygieneanforderungen der Trinkwassernutzung einzuhalten.

Zur Lösung der obigen Aufgabe wird mit der vorliegenden Erfindung ein Pufferspeicher mit den Merkmalen des Anspruchs 1 und ein Wärmeversorgungssystem mit den Merkmalen des Anspruchs 8 angegeben. Bevorzugte Ausgestaltungen der Erfindung sind in den Unteransprüchen angegeben, die jeweils einzeln oder in Kombination einen Aspekt der Erfindung darstellen können.

Die Erfindung betrifft einen Pufferspeicher für Heizungs- und/oder Trinkwassererwärmungsanlagen, mit einem Gehäuse, wobei das Gehäuse in einem ersten Gehäuseabschnitt wärmeres Wasser speichert und in einem zweiten Gehäuseabschnitt kälteres Wasser speichert, einer Wärmepumpe mit einer Warmseite zum Erwärmen des Wassers des Pufferspeichers und einer Kaltseite zum Kühlen des Wassers des Pufferspeichers, wobei warmes bzw. wärmeres Wasser vom ersten Gehäuseabschnitt zur Warmseite der Wärmepumpe übertragbar ist zum Erwärmen des Wasser, und kaltes bzw. kälteres Wasser vom zweiten Gehäuseabschnitt zur Kaltseite der Wärmepumpe übertragbar ist zum Kühlen des Wassers, wobei das warme Wasser nach dem Erwärmen in den ersten Gehäuseabschnitt übertragbar ist und das kalte Wasser nach dem Kühlen in den zweiten Gehäuseabschnitt übertragbar ist. Ein Trennelement trennt den ersten Gehäuseabschnitt von dem zweiten Gehäuseabschnitt.

Nach der vorliegenden Erfindung ist die Wärmepumpe in dem Trennelement gegebenenfalls in einer Position relativ mittig im Speicher angeordnet, wobei die Warmseite dem ersten Gehäuseabschnitt und die Kaltseite dem zweiten Gehäuseabschnitt zugewandt ist. Dadurch kann der Pufferspeicher kompakter ausgestaltet werden. Anstatt Bauraum für die Leitungen der Wärmepumpe und/oder zusätzliche Zirkulationspumpen bereitzustellen, ist die Wärmepumpe innerhalb des Gehäuses angeordnet. Weiterhin können dadurch unterstützende Zirkulationspumpen und externe Leitungen zur und von der Wärmepumpe eingespart werden, wodurch ein Aufbau des Pufferspeichers vereinfacht werden kann. Durch eine derartige Anordnung der Wärmepumpe im Gehäuse kann, beispielsweise durch Zufuhr von elektrischer Energie, die Warmseite der Wärmepumpe aufgeheizt werden, so dass die Warmseite die Energie direkt an das warme Wasser im ersten Gehäuseabschnitt abgeben kann. Aufgrund der Schwerkraftzirkulation im Gehäuse des Pufferspeichers kann das unmittelbar an der Wärmepumpe befindliche warme Wasser erwärmt werden und kann dadurch aufsteigen, so dass dadurch der erste Gehäuseabschnitt weiter aufgewärmt werden kann. Analog kann die Kaltseite das unmittelbar angrenzende kalte Wasser weiter abkühlen, so dass das gekühlte kalte Wasser aufgrund der Schwerkraftzirkulation nach unten sinken kann. Dadurch kann der zweite Gehäuseabschnitt des Gehäuses des Pufferspeichers gekühlt werden. Insbesondere kann aufgrund einer internen Anordnung eine sehr einfache Wärmepumpe verwendet werden, wodurch eine lange Lebensdauer ermöglicht werden kann.

Soweit zur Beschreibung der Erfindung auf warmes und kaltes Wasser abgestellt wird, soll damit vor allem die relative Temperatur zum Ausdruck gebracht werden. Das warme Wasser ist wärmer als das kalte Wasser.

Durch die Integration einer Wärmepumpe in das Trennelement innerhalb des Pufferspeichers kann sichergestellt werden, dass bei einem Zirkulationsfall des Wassers zur Trinkwasseraufbereitung oder zum Heizen in einem Heizkreislauf der zweite Gehäuseabschnitt des Pufferspeichers immer eine Temperatur aufweisen kann, bei welcher eine Forderung der Wärmequelle zum Heizen des Wassers nach einer niedrigen Wassertemperatur erfüllt wird, um eine Verringerung des Wirkungsgrads der Wärmequelle zu vermeiden. Weiterhin kann dadurch sicher gestellt werden, dass ein Wirkungsgrad der Nachheizung des warmen Wassers in dem Pufferspeicher von größer oder gleich 95% ist. Im Gegensatz zu einer externen Wärmepumpe wird bei der Erfindung keine Umgebungswärme genutzt. Stattdessen wird die vorhandene Energie im Pufferspeicher genutzt. Insbesondere kann dem kalten Wasser Wärme entzogen werden und dem warmen Wasser zugeführt werden.

Der Begriff Wärmepumpe beschreibt hierbei eine Vorrichtung, die unter Aufwendung von technischer Arbeit thermische Energie aus einem Reservoir mit niedriger Temperatur, beispielsweise der Umgebung, aufnimmt und als Nutzwärme auf ein zu beheizendes System mit höherer Temperatur überträgt. Die Wärmepumpe kann dabei eine Kompressionswärmepumpe, wie ein elektrischer Motor oder Verbrennungsmotor, eine Absorptionswärmepumpe, wie eine Ammoniakabsorptionskältemaschine, eine Adsorptionswärmepumpe oder ein Peltier-Element sein.

Der Begriff Warmseite der Wärmepumpe beschreibt hier die Seite der Wärmepumpe, welche das Wasser erhitzt. Sie wird auch als Primärseite bezeichnet.

Der Begriff Kaltseite der Wärmepumpe beschreibt hierbei die Seite der Wärmepumpe, welche das Wasser kühlt. Sie wird auch als Sekundärseite bezeichnet.

Der Begriff warmes Wasser bezeichnet ein Wasser mit einer Temperatur größer gleich 55°C bis kleiner gleich 100°C, vorzugsweise größer gleich 55°C bis kleiner gleich 65°C, insbesondere größer gleich 55°C bis kleiner gleich 60°C.

Der Begriff kaltes Wasser bezeichnet ein Wasser mit einer Temperatur größer gleich 5°C bis 35°C, vorzugsweise größer gleich 15°C bis kleiner gleich 30°C, insbesondere größer gleich 20°C bis kleiner gleich 25°C.

Der Begriff Pufferspeicher bezeichnet einen Wärmespeicher der mit Wasser gefüllt ist. Er dient dazu, Differenzen zwischen der erzeugten und der verbrauchten Wärmeleistung auszugleichen. Auf diese Weise können Systemkomponenten zur Wärmeerzeugung weitgehend unabhängig vom Verbrauch betrieben werden. Der Pufferspeicher kann dabei einerseits, beispielsweise als Wärmespeicher für solare Energie und fossil erzeugte Energie dienen, und andererseits als Wärmequelle für Trinkwassererwärmung und Heizungsunterstützung dienen. In der Regel ist das Gehäuse eines derartigen Pufferspeichers in drei Bereiche aufgeteilt, nämlich einen ersten Gehäuseabschnitt mit warmem Wasser, einen mittleren Gehäuseabschnitt, der als Mischbereich bezeichnet wird, und einen zweiten Gehäuseabschnitt mit kaltem Wasser. Dabei ist aufgrund der Schwerkraft der erste Gehäuseabschnitt in der Regel ein oberer Bereich des Gehäuses des installierten Pufferspeichers sein und der zweite Gehäuseabschnitt ein unterer Bereich des Gehäuses des Pufferspeichers.

Durch einen derartigen Pufferspeicher kann die im Pufferspeicher vorhandene Energie genutzt werden, um das warme Wasser nachzuheizen und das kalte Wasser zu kühlen, wodurch ein Wirkungsgrad der primären Wärmequelle ohne Einbußen verwendet werden kann. Weiterhin können durch den Pufferspeicher die Hygieneanforderungen für Trinkwasser eingehalten werden.

Das Trennelement kann vorzugsweise in einem mittleren Bereich des Gehäuses des Pufferspeichers angeordnet sein. Auf diese Weise kann der mittlere Bereich entfallen und der Pufferspeicher kann auf diese Weise nur warmes Wasser und kaltes Wasser enthalten.

Es ist bevorzugt, dass durch das Trennelement warmes Wasser aus dem ersten Gehäuseabschnitt in den zweiten Gehäuseabschnitt und kaltes Wasser aus dem zweiten Gehäuseabschnitt in den ersten Gehäuseabschnitt diffundierbar ist. Auf diese Weise kann eine Durchmischung des Wassers im Gehäuse ermöglicht werden.

Vorzugsweise ist das Trennelement in dem Gehäuse bewegbar angeordnet. Auf diese Weise kann das Trennelement entsprechend dem Verwendungszweck des Pufferspeichers in dem Gehäuse angeordnet werden. Dadurch kann der Pufferspeicher für verschiedene Wärmeversorgungssysteme verwendet werden. Dabei kann das Trennelement verschieblich geführt sein, beispielsweise über Schienen im Gehäuse verschiebbar angeordnet sein. Insbesondere kann eine Veränderung der Position des Trennelementes in dem Gehäuse automatisch oder manuell, beispielsweise durch händisches Verschieben, erfolgen. Weiterhin kann eine Verschiebung elektrisch oder hydraulisch erfolgen.

In einer bevorzugten Ausführungsform ist die Position des Trennelements in dem Gehäuse temperaturabhängig eingestellt. Durch eine temperaturabhängige Anordnung kann das Trennelement entsprechend der Temperaturverhältnisse im Gehäuse angeordnet werden, wodurch ein Wirkungsgrad der Wärmepumpe und des Pufferspeicher, sowie der Wirkungsgrad des Wärmeversorgungssystems verbessert werden kann. Insbesondere kann auf diese Weise der Energiebedarf der Wärmepumpe exakt auf die im Gehäuse herrschenden Temperaturverhältnisse eingestellt werden. Beispielsweise kann eine Anordnung des Trennelementes mit der Wärmepumpe in dem Gehäuse bei einer Wassertemperatur von 50°C erfolgen. Das Trennelement ist hinsichtlich seiner Dichte so ausgebildet und auf die Dichte des Wassers in dem Pufferspeicher so abgestimmt, dass es sich auf Höhe desjenigen Wassers befindet, das eine Temperatur von 50°C hat.

Es ist bevorzugt, dass das Trennelement ein Auftriebskörper umfasst. Auf diese Weise kann das Trennelement schwebend im Gehäuse derart angeordnet werden, dass es je nachdem wie die Temperaturverhältnisse im Gehäuse sind, durch das im Gehäuse befindliche Wasser in dem Gehäuse positioniert werden kann.

Vorzugsweise ist der Auftriebskörper aus Kork, aus einem Thermoplast oder aus einem Hohlkörper gebildet. Insbesondere kann der Thermoplast ein aufgeschäumter Thermoplast, wie Polystyrol sein. Ein Hohlkörper kann beispielsweise ein innen hohler oder ausgehöhlter Glaskörper sein.

In einer bevorzugten Ausführungsform ist die Wärmepumpe ein Peltier-Element ist. Der Begriff Peltier-Element beschreibt einen elektrothermischen Wandler. Ein Peltier-Element kann zwei Halbleiter umfassen, die ein unterschiedliches Energieniveau aufweisen. Bei einer Durchleitung von Strom durch zwei hintereinanderliegende Kontaktstellen dieser Materialien, kann auf der einen Kontaktstelle Wärmeenergie aufgenommen werden, damit ein Elektron in das energetisch höhere Leistungsband des benachbarten Halbleiters gelangen kann. Dadurch kann es zur Abkühlung kommen. Auf der anderen Kontaktstelle fällt das Elektron von einem höheren auf ein tieferes Energieniveau, so dass Energie in Form von Wärme abgegeben werden kann. Durch eine Verwendung von einem Peltier-Element können bewegliche Teile, Gase und Flüssigkeiten für eine Wärmepumpe eingespart werden, wodurch die Lebensdauer der Wärmepumpe verlängert werden kann. Weiterhin kann die Wärmepumpe kompakter und leichter ausgebildet werden. Dadurch kann Gewicht eingespart werden.

Die Erfindung gibt mit ihrem nebengeordneten Aspekt weiterhin ein Wärmeversorgungssystem zur Trinkwassererwärmung und Heizungsunterstützung mit einem zentralen Pufferspeicher an, welcher wie oben beschrieben ausgebildet oder weitergebildet sein kann, zur Bereitstellung von warmem Wasser, einer Wärmequelle zur Speicherung von warmen Wasser für den Pufferspeicher und für einen Heizkreislauf, und einem Plattenwärmetauscher zur Trinkwasserbereitung, wobei die Wärmequelle und der Plattenwärmetauscher mit dem Pufferspeicher verbunden sind.

Der Begriff Wärmequelle kann hierbei beispielsweise einen Heizkessel, eine Wärmepumpe, eine Solaranlage, ein Blockheizkraftwerk oder einen Festbrennstoffkessel bezeichnen.

Der Begriff Heizkreislauf kann hierbei beispielsweise eine Heizungsanlage für ein oder in einem Gebäude bezeichnen.

Durch ein derartiges Wärmeversorgungssystem, welches einen Pufferspeicher verwendet, der wie oben beschrieben ausgebildet oder weitergebildet sein kann, kann eine Wärmequelle ohne Einbußen des Wirkungsgrades genutzt werden und gleichzeitig können die Hygieneanforderungen der Trinkwassernutzung eingehalten werden.

Es ist bevorzugt, dass die Wärmequelle mit dem Heizkreislauf über eine Umgehungsleitung zur Umgehung des Pufferspeichers und direkten Überleitung einer in der Wärmequelle erzeugten Wärme in den Heizkreislauf verbindbar ist. Auf diese Weise kann die Wärmequelle eine erzeugte Wärme direkt, d.h. ohne einen Umweg über den Pufferspeicher an den Heizkreislauf weiterleiten.

In einer bevorzugten Ausführungsform umfasst die Leitung eine Ventilsteuerung zur Rückführung des Wassers in Abhängigkeit der Temperatur des Wassers in einen mittleren Bereich oder unteren Bereich des Pufferspeichers. Auf diese Weise kann sichergestellt werden, dass beispielsweise nicht zu warmes Wasser in den zweiten Gehäuseabschnitt des Gehäuses des Pufferspeichers geleitet wird, wodurch der Wirkungsgrad der Wärmequelle beeinträchtigt werden könnte, weil das kalte Wasser durch das warme zurückgeführte Wasser erwärmt werden könnte.

Weitere Einzelheiten und Vorteile der vorliegenden Erfindung ergeben sich aus der nachfolgenden Beschreibung von Ausführungsbeispielen in Verbindung mit der Zeichnung. In dieser zeigt:
Fig. 1 eine schematische Seitenansicht eines Schnittes eines Ausführungsbeispiels eines Pufferspeichers, und
Fig. 2 eine schematische Ansicht eines Wärmeversorgungssystems mit einem Pufferspeicher.
In der nachfolgenden Figurenbeschreibung werden für die gleichen Bauteile/Begriffe die gleichen Bezugszeichen verwendet.

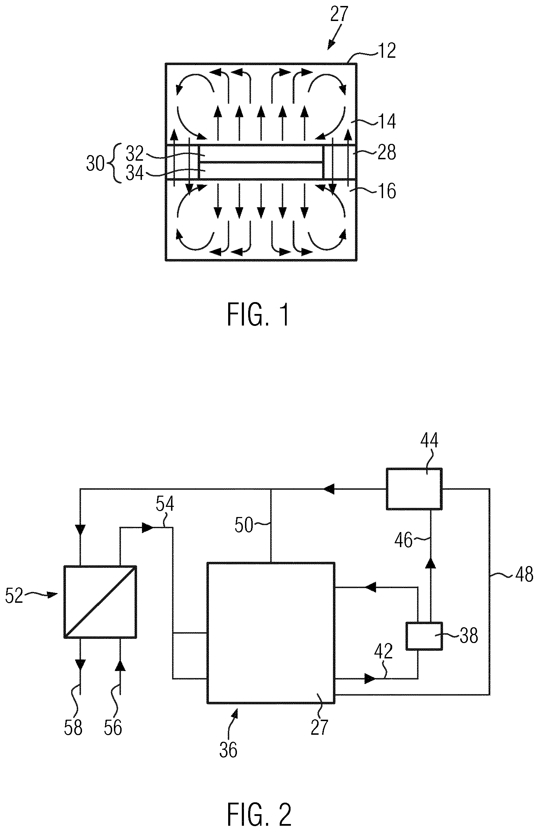

Fig. 1 zeigt ein Pufferspeicher 27 für Heizungs- und/oder Trinkwassererwärmungsanlagen, mit einem Gehäuse 12. Das Gehäuse 12 speichert in einem ersten Gehäuseabschnitt 14 warmes Wasser und in einem zweiten Gehäuseabschnitt 16 kaltes Wasser. Weiterhin umfasst der Pufferspeicher 27 eine Wärmepumpe 30 mit einer Warmseite 32 zum Erwärmen des Wassers des Pufferspeichers 27 und einer Kaltseite 34 zum Kühlen des Wassers des Pufferspeichers 27. Das kalte Wasser kann eine Temperatur von 25°c aufweisen und das von der Warmseite 32 der Wärmepumpe 30 abgehende warme Wasser kann eine Temperatur von 60°C aufweisen. Die Wärmepumpe 30 kann dabei an der Kaltseite 32 vom kalten Wasser Wärme entziehen, um das kalte Wasser zu kühlen, und die entzogene Wärme über die Warmseite 34 dem warmen Wasser zuführen. Der Pufferspeicher 27 umfasst in dem Gehäuse 12 ein Trennelement 28 zur Trennung des ersten Gehäuseabschnitts 14 vom zweiten Gehäuseabschnitt 16. In dem Trennelement 28 ist eine Wärmepumpe 30 angeordnet. Dabei ist die Warmseite 32 der Wärmepumpe 30 dem ersten Gehäuseabschnitt 14 und die Kaltseite 34 der Wärmepumpe 30 dem zweiten Gehäuseabschnitt 16 zugewandt. Durch das Trennelement 28 ist warmes Wasser aus dem ersten Gehäuseabschnitt 14 in den zweiten Gehäuseabschnitt 16 und kaltes Wasser aus dem zweiten Gehäuseabschnitt 16 in den ersten Gehäuseabschnitt 14 überführbar. Dies wird anhand der Pfeile, welche das Trennelement 28 durchdringen angedeutet. Das Trennelement 28 ist in dem Gehäuse 12 bewegbar angeordnet und kann aufgrund einer Temperatur im Übergangsbereich zwischen dem ersten Gehäuseabschnitt 14 und dem zweiten Gehäuseabschnitt 16 seine Position im Gehäuse 12 verändern. Dazu umfasst das Trennelement 28 einen Auftriebskörper, der aus einem Thermoplast, insbesondere einem aufgeschäumten Thermoplast, ausgebildet ist. Die Wassertemperatur, in welcher das Trennelement 28 im Gehäuse 12 befindlich ist, kann bei 50°C liegen.

In diesem Ausführungsbeispiel soll die Wärmepumpe 30 ein Peltier-Element sein. Durch Zufuhr von elektrischer Energie wird die Warmseite 32 der Wärmepumpe 30 aufgeheizt und gibt dabei seine Energie in den ersten Gehäuseabschnitt 14 ab. Dadurch wird das über der Warmseite 32 befindliche warme Wasser aufgewärmt. Aufgrund der Schwerkraftzirkulation im Gehäuse 12 des Pufferspeichers 27 wird das unmittelbar an der Warmseite 32 befindliche erwärmte warme Wasser aufsteigen und dadurch den gesamten ersten Gehäuseabschnitt 14 weiter aufwärmen. Analog gilt dies für die Kaltseite 34 der Wärmepumpe 30, welche das unmittelbar an der Kaltseite 34 befindliche kalte Wasser weiter abkühlt. Dadurch wird das gekühlte kalte Wasser absinken und den zweiten Gehäuseabschnitt 16 weiter kühlen. Die Schwerkraftzirkulation ist in Fig. 1 durch die Pfeile im ersten Gehäuseabschnitt 14 und im zweiten Gehäuseabschnitt 16 angedeutet.

In Fig. 2 ist ein Wärmeversorgungssystem 36 zur Trinkwassererwärmung und Heizungsunterstützung schematisch dargestellt. Das Wärmeversorgungssystem 36 umfasst einen zentralen Pufferspeicher 27 zur Bereitstellung von warmem Wasser. Der Pufferspeicher 27 soll ein Pufferspeicher 27 gemäß der Fig. 1 sein. Der Pufferspeicher 27 ist mit einer Wärmequelle 38, wie eine Solaranlage verbunden, die warmes Wasser für den Pufferspeicher 27 bereitstellt. Dabei ist die Wärmequelle 38 mit einem oberen Abschnitt des Pufferspeichers 27 über die Leitung 40 verbunden, um warmes Wasser in den Pufferspeicher 27 zu leiten. Weiterhin ist die Wärmequelle 38 über die Leitung 42 mit einem unteren Abschnitt des Pufferspeichers 27 verbunden, um kaltes Wasser vom Pufferspeicher 27 zum Erwärmen zugeführt zu bekommen. Die Wärmequelle 38 ist weiterhin mit einem Heizkreislauf 44, wie eine Heizungsanlage in einem nicht dargestellten Gebäude, direkt über eine Überleitung 46 verbunden. Durch die Überleitung 46 kann die Wärmequelle 38 dem Heizkreislauf 44 direkt warmes Wasser zur Verfügung stellen, ohne dass der Heizkreislauf 44 warmes Wasser von dem Pufferspeicher 27 bezieht. Das nach der Verwendung des warmen Wassers in dem Heizkrauslauf 44 abgekühlte Wasser wird über die Leitung 48 in den Pufferspeicher 27 geführt.

Der Pufferspeicher 27 ist am oberen Bereich über eine Leitung 50 mit dem Heizkreislauf 44 und einem Plattenwärmetauscher 52 verbunden. In dem Plattenwärmetauscher 52 wird Trinkwasser erhitzt. Das abgekühlte warme Wasser aus dem Pufferspeicher 27 wird von dem Plattenwärmetauscher 52 über eine externe Leitung 54 zurück an den Pufferspeicher 27 übertragen. Dabei weist die Leitung 54 ein nicht dargestelltes Umschaltventil auf, um das zurückgeführte Wasser je nach Temperatur entweder in den mittleren Bereich des Pufferspeichers 27 oder in den unteren Bereich des Pufferspeichers 27 zurückzuführen. Der mittlere Bereich stellt den Mischbereich und der untere Bereich den zweiten Gehäuseabschnitt des Pufferspeichers 27 dar. Beispielsweise wird bei einer Rücklauftemperatur von 25°C das Wasser über die Leitung 54 in den unteren Bereich des Pufferspeichers 27 geleitet, und bei einer Temperatur über 30°C in den mittleren Bereich des Pufferspeichers 27. Der Plattenwärmetauscher 52 verfügt weiterhin über eine Leitung 56 zum Einlass von kaltem Trinkwasser und eine Leitung 58 zum Auslass des erwärmten Trinkwassers.

### Bezugszeichenliste

- 12: Gehäuse
- 14: erster Gehäuseabschnitt
- 16: zweiter Gehäuseabschnitt
- 27: Pufferspeicher
- 28: Trennelement
- 30: Wärmepumpe
- 32: Warmseite
- 34: Kaltseite
- 36: Wärmeversorgungssystem
- 38: Wärmequelle
- 40: Leitung
- 44: Heizkreislauf
- 46: Überleitung
- 48: Leitung zwischen Heizkreislauf und Pufferspeicher für kaltes Wasser
- 50: Leitung zwischen Heizkreislauf und Pufferspeicher für warmes Wasser
- 52: Plattenwärmetauscher
- 54: Leitung vom Plattenwärmer zum Pufferspeicher
- 56: Leitung für den Einlass vom kaltem Trinkwasser (TWK)
- 58: Leitung für den Auslass von warmem Trinkwasser (TWH)

## Patentansprüche

1. Pufferspeicher für Heizungs- und/oder Trinkwassererwärmungsanlagen, mit einem Gehäuse (12), das einen ersten Gehäuseabschnitt (14) und einen zweiten Gehäuseabschnitt (16) aufweist, wobei der erste Gehäuseabschnitt (14) für die Speicherung von wärmerem Wasser und der zweite Gehäuseabschnitt (16) zur Speicherung von kälterem Wasser angepasst ausgebildet ist,
einer Wärmepumpe (18, 30) mit einer Warmseite (20, 32) zum Erwärmen des Wassers des Pufferspeichers und
einer Kaltseite (22, 34) zum Kühlen des Wassers des Pufferspeichers,
wobei warmes Wasser vom ersten Gehäuseabschnitt (14) zur Warmseite (20, 32) der Wärmepumpe (18, 30) übertragbar ist zum Erwärmen des Wassers, und kaltes Wasser vom zweiten Gehäuseabschnitt (16) zur Kaltseite (22, 34) der Wärmepumpe (18, 30) übertragbar ist zum Kühlen des Wassers, wobei das wärmere Wasser nach dem Erwärmen in den ersten Gehäuseabschnitt (14) übertragbar ist und das kältere Wasser nach dem Kühlen in den zweiten Gehäuseabschnitt (16) übertragbar ist und wobei das Gehäuse (12) ein Trennelement (28) zur Trennung des ersten Gehäuseabschnitts (14) vom zweiten Gehäuseabschnitt (16) umfasst,
**dadurch gekennzeichnet,**
**dass** die Wärmepumpe (30) in dem Trennelement (28) angeordnet ist, wobei die Warmseite (32) dem ersten Gehäuseabschnitt (14) und die Kaltseite (34) dem zweiten Gehäuseabschnitt (16) zugewandt ist.

2. Pufferspeicher nach Anspruch 1, **dadurch gekennzeichnet, dass** durch das Trennelement (28) warmes Wasser aus dem ersten Gehäuseabschnitt (14) in den zweiten Gehäuseabschnitt (16) und kaltes Wasser aus dem zweiten Gehäuseabschnitt (16) in den ersten Gehäuseabschnitt (14) diffundierbar ist.

3. Pufferspeicher nach Anspruch 1 oder 2, **dadurch gekennzeichnet, dass** das Trennelement (28) in dem Gehäuse (12) bewegbar angeordnet ist.

4. Pufferspeicher nach einem der Ansprüche 1 bis 3, **dadurch gekennzeichnet, dass** die Position des Trennelements (28) in dem Gehäuse (12) temperaturabhängig ist.

5. Pufferspeicher nach Anspruch 3 oder 4, **dadurch gekennzeichnet, dass** das Trennelement (28) ein Auftriebskörper umfasst.

6. Pufferspeicher nach Anspruch 5, **dadurch gekennzeichnet, dass** der Auftriebskörper, aus Kork aus einem Thermoplast oder aus einem Hohlkörper gebildet ist.

7. Pufferspeicher nach einem der Ansprüche 1 bis 6, **dadurch gekennzeichnet, dass** die Wärmepumpe (30) ein Peltier-Element ist.

8. Wärmeversorgungssystem zur Trinkwassererwärmung und Heizungsunterstützung mit einem zentralen Pufferspeicher (10, 27) nach einem der Ansprüche 1 bis 7 zur Speicherung von warmem Wasser,
einer Wärmequelle (38) zur Bereitstellung von warmen Wasser für den Pufferspeicher (10, 27) und für einen Heizkreislauf (44), und
einem Plattenwärmetauscher (52) zur Trinkwasserbereitung,
wobei die Wärmequelle (38) und der Plattenwärmetauscher (52) mit dem Pufferspeicher verbunden sind.

9. Wärmeversorgungssystem nach Anspruch 8, **dadurch gekennzeichnet, dass** die Wärmequelle (38) mit dem Heizkreislauf (44) über eine Umgehungsleitung (46) zur Umgehung des Pufferspeichers (10, 27) und direkten Überleitung einer in der Wärmequelle (38) erzeugten Wärme in den Heizkreislauf (44) verbindbar ist.

10. Wärmeversorgungssystem nach einem der Ansprüche 8 oder 9, **dadurch gekennzeichnet, dass** der Plattenwärmetauscher (52) über eine externe Leitung (54) zur Rückleitung von Wasser mit dem Pufferspeicher (10, 27) verbunden ist, die eine Ventilsteuerung zur Rückführung des Wassers in Abhängigkeit der Temperatur des Wassers in einen mittleren Bereich oder unteren Bereich des Pufferspeichers (10, 27) umfasst.

## Claims

1. Buffer tank for heating installations and/or drinking-water heating installations, comprising a housing (12), which comprises a first housing portion (14) and a second housing portion (16), the first housing portion (14) being designed to store warmer water and the second housing portion (16) being designed to store colder water, a heat pump (18, 30) comprising a warm side (20, 32) for heating the water in the buffer tank and a cold side (22, 34) for cooling the water in the buffer tank, warm water being transferrable from the first housing portion (14) to the warm side (20, 32) of the heat pump (18, 30) in order to heat the water, and cold water being transferrable from the second housing portion (16) to the cold side (22, 34) of the heat pump (18, 30) in order to cool the water, the warmer water being transferrable into the first housing portion (14) after heating and the colder water being transferrable into the second housing portion (16) after cooling, and the housing (12) comprising a separating element (28) for separating the first housing portion (14) from the second housing portion (16), **characterised in that** the heat pump (30) is arranged in the separating element (28), the warm side (32) facing the first housing portion (14) and the cold side (34) facing the second housing portion (16).

2. Buffer tank according to claim 1, **characterised in that** warm water can diffuse out of the first housing portion (14) into the second housing portion (16) and cold water can diffuse out of the second housing portion (16) into the first housing portion (14) by means of the separating element (28).

3. Buffer tank according to either claim 1 or claim 2, **characterised in that** the separating element (28) is movably arranged in the housing (12).

4. Buffer tank according to any of claims 1 to 3, **characterised in that** the position of the separating element (28) in the housing (12) is temperature-dependent.

5. Buffer tank according to either claim 3 or claim 4, **characterised in that** the separating element (28) comprises a float.

6. Buffer tank according to claim 5, **characterised in that** the float is made of cork, a thermoplastic polymer or a hollow body.

7. Buffer tank according to any of claims 1 to 6, **characterised in that** the heat pump (30) is a Peltier element.

8. Heat supply system for heating drinking water and assisting with heating, comprising a central buffer tank (10, 27) according to any of claims 1 to 7 for storing warm water, a heat source (38) for providing warm water to the buffer tank (10, 27) and to a heating circuit (44), and a plate heat exchanger (52) for processing drinking water, the heat source (38) and the plate heat exchanger (52) being connected to the buffer bank.

9. Heat supply system according to claim 8, **characterised in that** the heat source (38) can be connected to the heating circuit (44) via a bypass line (46) for bypassing the buffer tank (10, 27) and for feeding heat generated in the heat source (38) directly into the heating circuit (44).

10. Heat supply system according to either claim 8 or claim 9, **characterised in that** the plate heat exchanger (52) is connected to the buffer tank (10, 27) via an external line (54) for recirculating water that comprises a valve controller for returning the water to a central region or lower region of the buffer tank (10, 27) depending on the temperature of the water.

## Revendications

1. Accumulateur tampon pour des installations de chauffage et/ou d'échauffement d'eau potable, qui comprend
un carter (12), qui présente une première partie de carter (14) et une deuxième partie de carter (16), la première partie de carter (14) étant réalisée de manière à être adaptée au stockage d'eau plus chaude, et la deuxième partie de carter (16) au stockage d'eau plus froide,
une pompe à chaleur (18, 30) avec un côté chaud (20, 32) pour échauffer l'eau de l'accumulateur tampon, et un côté froid (22, 34) pour refroidir l'eau de l'accumulateur tampon,
ensemble
dans lequel de l'eau chaude peut être transférée de la première partie de carter (14) au côté chaud (20, 32) de la pompe à chaleur (18, 30), pour échauffer l'eau, et de l'eau froide peut être transférée de la deuxième partie de carter (16) au côté froid (22, 34) de la pompe à chaleur (18, 30), pour refroidir l'eau,
dans lequel l'eau plus chaude peut, après son échauffement, être transférée dans la première partie de carter (14), et l'eau plus froide peut, après refroidissement, être transférée dans la deuxième partie de carter (16), et
dans lequel le carter (12) comporte un élément de séparation (28) pour séparer la première partie de carter (14) de la deuxième partie de carter (16),
**caractérisé**
**en ce que** la pompe à chaleur (30) est agencée dans l'élément de séparation (28), le côté chaud (32) étant dirigé vers la première partie de carter (14), et le côté froid (34) est dirigé vers la deuxième partie de carter (16).

2. Accumulateur tampon selon la revendication 1, **caractérisé en ce qu'**au travers de l'élément de séparation (28), de l'eau chaude peut diffuser de la première partie de carter (14) dans la deuxième partie de carter (16), et de l'eau froide peut diffuser de la deuxième partie de carter (16) dans la première partie de carter (14).

3. Accumulateur tampon selon la revendication 1 ou la revendication 2, **caractérisé en ce que** l'élément de séparation (28) est agencé de manière à être mobile dans le carter (12).

4. Accumulateur tampon selon l'une des revendications 1 à 3, **caractérisé en ce que** la position de l'élément de séparation (28) dans le carter (12) est fonction de la température.

5. Accumulateur tampon selon la revendication 3 ou la revendication 4, **caractérisé en ce que** l'élément de séparation (28) comprend un flotteur.

6. Accumulateur tampon selon la revendication 5, **caractérisé en ce que** le flotteur est réalisé en liège, en un thermoplastique ou sous forme de corps creux.

7. Accumulateur tampon selon l'une des revendications 1 à 6, **caractérisé en ce que** la pompe à chaleur (30) est un module Peltier.

8. Système d'approvisionnement en chaleur pour l'échauffement d'eau potable et l'assistance au chauffage, comprenant
un accumulateur tampon central (10, 27) selon l'une des revendications 1 à 7, pour le stockage d'eau chaude,
une source de chaleur (38) pour fournir de l'eau chaude destinée à l'accumulateur tampon (10, 27) et pour un circuit de chauffage (44), et
un échangeur de chaleur à plaques (52) pour la fourniture d'eau potable,
le système étant tel, que la source de chaleur (38) et l'échangeur de chaleur à plaques (52) soient reliés à l'accumulateur tampon.

9. Système d'approvisionnement en chaleur selon la revendication 8, **caractérisé en ce que** la source de chaleur (38) peut être reliée au circuit de chauffage (44) par l'intermédiaire d'une conduite de dérivation (46) pour contourner l'accumulateur tampon (10, 27), et assurer le transfert direct d'une chaleur produite dans la source de chaleur (38), dans le circuit de chauffage (44) .

10. Système d'approvisionnement en chaleur selon la revendication 8 ou la revendication 9, **caractérisé en ce que** l'échangeur de chaleur à plaques (52) est relié à l'accumulateur tampon (10, 27) par l'intermédiaire d'une conduite externe (54) pour le retour d'eau, qui comprend une commande de vanne pour le retour d'eau, en fonction de la température de l'eau, dans une zone centrale ou une zone inférieure de l'accumulateur tampon (10, 27).
